# EUROPEAN PATENT APPLICATION

(11) **EP 4 656 300 A1**
(43) Date of publication of application: **03.12.2025**
(21) Application number: 23918249.6
(22) Date of filing: 22.12.2023
(51) Int. Cl.: B07C 5/34, B65F 1/00, B09B 3/30

(54) **SYSTEM FOR VERIFICATION AND CLASSIFICATION OF THE CONTENTS OF BAGGED WASTE**

(30) Priority: 23.01.2023 ES 202330099 U
(71) Applicant: THERECIRCULARS, S.L., 03440 Ibi, Alicante (ES)
(72) Inventor: GUILLEM PICÓ, Ignacio, 03440 Ibi (Alicante) (ES)
(74) Representative: Ibarra Garcia, Isabel
(86) International application number: PCT/ES2023/070780
(87) International publication number: WO 2024/156927

(57) **Abstract**

The present invention relates to a system for the verification and sorting of the contents of bagged waste which is provided with an unloading area, a belt with an alignment funnel for aligning the bagged waste, an **RFID** detector, an X-ray scanner, a pivoting paddle, a compliant waste treatment line, a non-compliant waste treatment line, and leachate collectors. Therefore, the end of the belt with a funnel is arranged 0.1 m above the conveyance means to cause the downward displacement of the waste, such that the **RFID** detector performs the reading of **RFID** transmitters in the downward displacement of each waste; and the X-ray scanner determines the percentage of organic matter, such that the pivoting paddle is operated by the control unit based on the percentage of organic matter in order to send it selectively to the compliant or non-compliant waste treatment line.

## Description

System for the verification and sorting of the contents of bagged waste.

### FIELD OF THE ART

The present invention relates to a system for the verification and sorting of the contents of bagged waste. Specifically, the system of the invention enables the identification of the user who has deposited the bagged waste and the verification of the nature thereof, i.e., if its contents correspond to organic matter or to non-organic matter, such that the sorting of the analyzed waste is subsequently performed in accordance with the obtained result.

The object of the invention consists of separating the waste into compliant or non-compliant waste according to the contents of its organic matter for a swift subsequent treatment, and simultaneously identifying the users who deposit compliant or non-compliant waste.

### BACKGROUND OF THE INVENTION

Waste treatment plants currently face a serious problem, as they have to treat large amounts of waste of very different natures. The fact is that the rate of degradation of organic matter is much higher than other types of waste, such as plastic waste, for example.

In order to increase treatment efficiency in landfills, it would be very helpful if the waste arriving at the site had a high organic matter content. In other words, measures need to be implemented to facilitate the identification and sorting of waste with a high organic matter content to facilitate its subsequent treatment in landfills.

Moreover, and taking into account the need to raise awareness among the population of the importance of effective sorting of generated waste at the source according to its nature, various measures are known to promote citizens' concern for the environment and their proactivity in separating at the source the waste they generate. However, it is necessary to implement a system that allows identifying who is performing the separation task at the source correctly and who is not.

Therefore, RFID (radio frequency identification) technology which allows remote data to be identified, stored, and transmitted using radio frequencies is known in the prior art. RFID technology is widely used in parcel delivery and logistics to swiftly monitor and control items being shipped based on orders received. In the field of waste recovery, RFID technology is beginning to be used to trace collection and delivery points, with reading arches on trucks or at treatment plants in order to identify users of the system. Likewise, as disclosed in utility model no. ES1271572U, there are known systems that allow, by means of RFID, identifying the user who has deposited the bag with waste and, additionally, after the bag with waste is opened, allow identifying the products the bag contained by means of computer vision cameras. However, the equipment disclosed in ES1271572U does not allow for correct identification of the user and does not include the technology required to store waste at different points based on whether or not it complies with the organic matter content required.

Moreover, X-ray scanners are known in the food industry for identifying foreign bodies, for example, in the selection of oranges or in the processing of yogurts. X-ray scanners are also used in airports to check luggage and in healthcare, for example, to identify broken bones by means of X-raying patients. However, the applicant of the present invention is not aware of the use of this technology in waste treatment.

Therefore, there are no known systems that use RFID combined with X-ray scanners that can unambiguously obtain data on the user who deposited the bagged waste and are capable of identifying the amount of organic and inorganic matter contained in said bagged waste.

### DESCRIPTION OF THE INVENTION

The system described above solves in a fully satisfactory manner the problems described above based on a highly effective solution which offers optimal functionality, with small measurements, being easy to clean, and having leachate collecting elements that enable the sorting of waste with a lower liquid content.

Moreover, the system of the present invention offers reliable detection in the event that the waste received includes an RFID transmitter or tag, by proposing a specific configuration, as detailed below, combined with the inclusion of at least one RFID detector in a suitable place.

An RFID tag should be understood to mean any transmitter, whether a tag, sticker, or other element that is linked to the bag with waste itself, whether adhered to its surface, contained within the closed bag, etc.; said tag or transmitter including RFID technology to transmit and allow its reading when passing through an RFID detector consisting of an array of high-powered antennas for the identification of RFID transmitters or tags.

Therefore, the system for the verification and sorting of the contents of bagged waste is formed by at least the following elements:
- an unloading area for unloading the bagged waste,
- a belt with an alignment funnel for aligning the bagged waste,
- a first RFID detector arranged on conveyance means which identifies RFID transmitters associated with the users,
- an X-ray scanner determining the percentage of organic matter and non-organic matter of each bagged waste,
- a pivoting paddle that is motorized and controlled by means of a control unit.
- a compliant waste treatment line formed by at least one bag opener, magnetized means, and a ferric or metallic waste receptacle. The compliant waste treatment line optionally includes a compliant waste container. Alternatively, when the system of the invention is assembled in a treatment plant, the waste is sent for its subsequent processing,
- a non-compliant waste treatment line formed by at least one bag opener, magnetized means, and a waste receptacle and a non-compliant waste container. Optionally, the non-compliant waste treatment line includes a non-compliant waste container. Alternatively, when the system of the invention is assembled in a treatment plant the waste is sent directly for its subsequent processing, and
- leachate collectors arranged under the aforementioned elements and formed by inclined trays inclined towards drainage points connected to a leachate conduit.

In this sense, for a reliable detection of the RFID transmitter contained in the bagged waste by the first detector, the end of the belt with a funnel must be arranged above the conveyance means at a height difference of at least 0.1 m.

Said height difference causes the downward displacement with a sudden falling of the bagged waste, such that the waste stored in the bag is separated and the RFID detector performs the reading of the RFID transmitter or tag in the downward displacement of each bagged waste.

Therefore, the height difference described in detail is absolutely necessary to obtain a 100% reliable reading of the RFID transmitters. In fact, it has been found that the absence of said height difference would cause continuous RFID reading failures and, therefore, it would not be possible to obtain a high success rate of traceability of the deposited waste with respect to the user who generated it.

Moreover, and this also being an essential aspect of the present invention, the X-ray scanner of the system determines the percentage of organic matter and non-organic matter of the bagged waste. This information is vital and sent to the control unit which controls the pivoting paddle. Therefore, the pivoting paddle of the system is operated by the control unit based on the percentage of organic matter contained in the bagged waste in order to send it selectively to the compliant or non-compliant waste treatment line.

In summary, the height difference located at a specific point to necessarily generate the sudden falling of the bagged waste as it passes through the RFID detector enables the correct reading of the RFID transmitters. This configuration combined with the presence of the X-ray scanner determining the percentage of organic matter and non-organic matter of the deposited bagged waste allows verifying whether or not the identified user has deposited the bagged waste with a high percentage of organic matter.

It should be noted that the programming implemented in the control unit will be that which, based on the % of set organic matter, and in accordance with the value read by the X-ray scanner, will operate the pivoting paddle to send the bagged solid waste to the compliant waste treatment line (due to a high percentage of organic matter) or to the non-compliant waste treatment line (if the reading performed by the X-ray scanner has not returned the minimum allowable value of organic matter).

As indicated above, once the bagged waste has been identified (or traced by means of the RFID detector), its organic matter content has been verified (by means of using the X-ray scanner), and has been led to the compliant or non-compliant waste treatment track by means of the pivoting paddle, the bag is opened by means of an opener and the waste removed from the bag is passed through magnetized or magnetic means to recover the metallic components or parts that may have entered the system.

Moreover, it should be noted that the leachate collectors, arranged in the lower plane with respect to the elements forming the rest of the system of the invention, enable the removal and accumulation of liquids, or commonly referred to as leachates, in a leachate storage receptacle, such that said receptacle is connected to the leachate conduit and the leachates are propelled preferably by means of a leachate propulsion pump.

As indicated above, the leachate collectors are formed by inclined trays inclined towards drainage points located in the lowest part of the trays. Therefore, the leachates reach the trays by gravity as they come from the bagged waste being analyzed in the plane above the trays, through the passage thereof through the elements forming the system. Optionally, the system includes a leachate propulsion pump connected to the leachate conduit leading the leachates to a leachate storage receptacle.

One of the advantages of the system of the present invention is the possibility of being installed in small spaces to enable a 'KM0' recovery (i.e., without having to move the waste) with guarantees, and only waste that has been sorted as non-compliant is sent to the waste selection and treatment plant. In this sense, waste that has been sorted as compliant by the system of the present invention can go directly to composting or bio-generation plants, thus helping the entities that operate these plants to reduce the volume of waste sent. Additionally, the identification of the user to whom the bagged waste that has been sorted as non-compliant belongs will allow the higher waste treatment fees to be applied than for those who have deposited waste in accordance with the minimum organic matter set in the software associated with the system's control unit.

Finally, the method for the verification and sorting of the contents of bagged waste must be described in detail according to the elements making up the system of the present invention. Therefore, said method is formed by at least the following steps:
- receiving the bagged waste in the unloading area,
- aligning the bagged waste on the belt with a funnel,
- identifying the RFID transmitters contained in the waste by means of a first RFID detector,
- sending the information obtained in the preceding step to the control unit,
- determining the percentage of organic matter and non-organic matter of each bagged waste by means of an X-ray scanner detector,
- sending the information obtained in the preceding step to the control unit,
- determining if the analyzed waste is compliant or non-compliant by means of the control unit,
- operating the pivoting paddle by means of the control unit for selectively sending the bagged waste to the compliant waste treatment line or to the non-compliant waste treatment line,
- opening the bagged waste by means of the bag opener in the compliant waste treatment line and/or in the non-compliant waste treatment line,
- removing ferric or metallic waste using magnetized means in the compliant waste treatment line and/or in the non-compliant waste treatment line,
- storing the treated waste in the container of the compliant waste treatment line and/or in the container of the non-compliant waste treatment line; or sending the treated waste for its subsequent processing when the system of the invention is assembled in a treatment plant,
- storing leachates by means of the leachate collectors arranged under the unloading area, the belt with a funnel, the first RFID detector, the X-ray scanner, the pivoting paddle, the compliant waste treatment line, and the non-compliant waste treatment line.

Said method provides a notable competitive advantage as it enables the identification of the user who has deposited the bagged waste and, simultaneously, verifying if said bagged waste has a minimum percentage of organic matter to allow the sorting and storage thereof as compliant waste.

### BRIEF DESCRIPTION OF THE DRAWINGS

To complement the description that will be given below and for the purpose of helping to better understand the features of the invention according to a preferred practical embodiment thereof, a set of drawings is attached as an integral part of said description, in which the following has been depicted in an illustrative and non-limiting manner:
Figure 1 shows a general perspective view of the system for the verification and sorting of the contents of bagged waste performed according to the object of the present invention.
Figure 2 shows a detailed perspective view of the waste collection truck, the unloading area, the belt with an alignment funnel for aligning the bags, and the first RFID detector participating in the system of the invention of Figure 1.
Figure 3 shows a detailed perspective view of the preceding figure.
Figure 4 shows a detailed perspective view of the second RFID detector, the pivoting paddle, and part of the compliant waste treatment line and the non-compliant waste treatment line participating in the system of the invention of Figure 1.
Figure 5 shows a detailed perspective view of the compliant waste treatment line participating in the system of the invention of Figure 1.
Figure 6 shows a side view of the leachate collector, the leachate conduit, and the leachate propulsion pump participating in the system of the invention of Figure 1.
Figure 7 shows a plan view of the leachate collector, the leachate conduit, and the leachate propulsion pump participating in the system of the invention of Figure 1.

### PREFERRED EMBODIMENT OF THE INVENTION

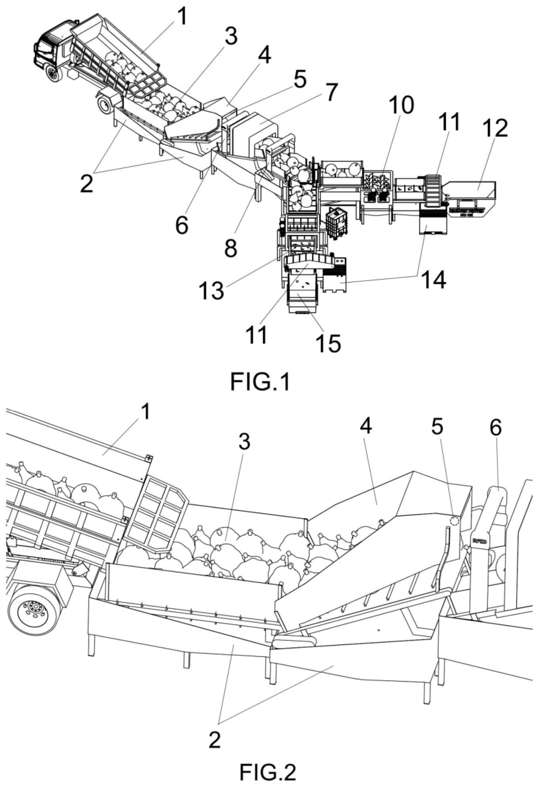

In view of the described figures, specifically Figure 1, it can be seen that the system for the verification and sorting of the contents of bagged waste of the present invention is formed by the following elements in accordance with the preferred embodiment of the invention:
- an unloading area (3) for unloading the bagged waste,
- a belt with an alignment funnel (4) for aligning the bagged waste, which optionally includes a cylinder (5) with bag stop springs, said belt with a funnel (4) being preferably inclined,
- a first RFID detector (6) arranged on conveyance means (19) which identifies RFID transmitters associated with the users,
- an X-ray scanner (7) determining the percentage of organic matter and non-organic matter of each bagged waste,
- a pivoting paddle (9) that is motorized and controlled by means of a control unit,
- a compliant waste treatment line formed by at least one bag opener, magnetized means (11), a ferric waste receptacle (14), and a compliant waste container (15),
- a non-compliant waste treatment line formed by at least one bag opener, magnetized means (11), a ferric waste receptacle (14), and a non-compliant waste container (12), and
- leachate collectors (2) arranged under the aforementioned elements and formed by inclined trays inclined towards drainage points connected to a leachate conduit (16).

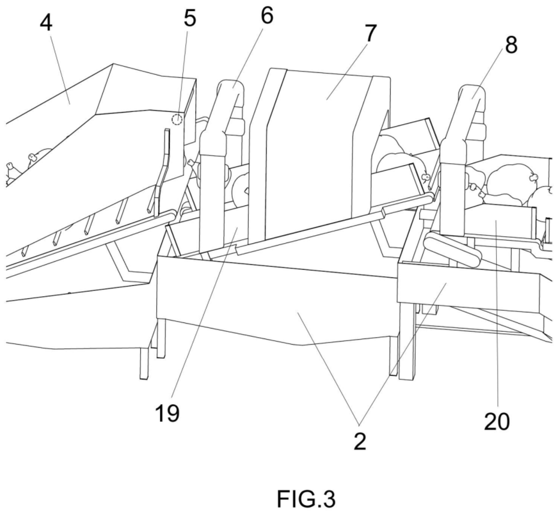

As can be seen both in Figure 2 and in Figure 3, the end of the belt with a funnel (4) is arranged above the conveyance means (19) at a height difference of preferably between 0.1 m and 1 m to cause the downward displacement of the bagged waste. Therefore, the first RFID detector (6) performs the reading of RFID transmitters in the downward displacement of the bagged waste, allowing the identification of the user who has deposited each bagged waste. In other words, prior to the entry of the waste in the system of the present invention, the user will have linked the bagged waste to themselves by means of an RFID tag or transmitter such that the reading thereof in the system of the invention enables knowing who has deposited said bagged waste.

Moreover, the X-ray scanner (7) of the system of the invention determines the percentage of organic matter and non-organic matter of the bagged waste. Optionally, as can be seen in Figure 3, the system has a second RFID detector (8) arranged on second conveyance means (20). Therefore, the second conveyance means (20) are arranged below the conveyance means (19) at a height difference of at least 0.1 m to cause the downward displacement of each bagged waste. Again, at this point, the downward displacement causes a sudden falling of the bagged waste, such that the waste stored in the bag is separated, and the second RFID detector (8) performs the reading of the RFID transmitter or tag in the downward displacement of the bagged waste. Therefore, the purpose of this second RFID detector (8) is to confirm the identity of the RFID transmitter that has been determined by the first RFID detector (6).

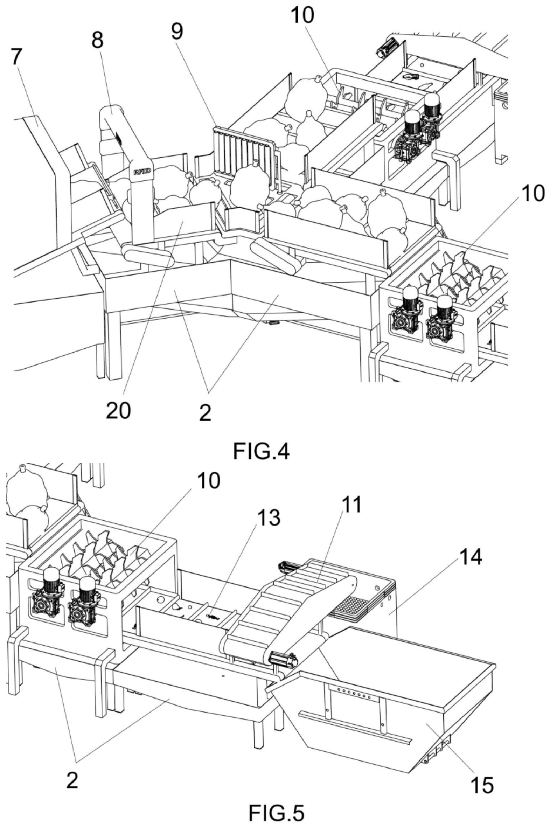

Once the identity of the user has been confirmed by means of the first RFID detector (6), the percentage of organic matter and non-organic matter of the bagged waste has been verified by means of the X-ray scanner (7), and the identity of the user has been reconfirmed with the reading of the RFID transmitter of the bagged waste using the second RFID detector (8), the information is taken to a control unit (not depicted in the figures of the present specification) which sends the corresponding instructions to control the position of the pivoting paddle (9). In other words, the pivoting paddle (9) is operated by the control unit based on the percentage of organic matter contained in the bagged waste and which has been read by the X-ray scanner (7), such that said pivoting paddle (9) selectively sends the analyzed bagged waste to the compliant or non-compliant waste treatment line according to the reading obtained by the X-ray scanner (7). The detail of the bifurcation where the pivoting paddle (9) is located can be seen in Figure 4
Both the compliant waste treatment line and the non-compliant waste treatment line include bag openers which are preferably formed by rotary blades (10), whereas the magnetized means (11) are formed by magnetized belts or magnetized rollers removing any body or waste made of metal, which are stored in ferric waste receptacles (14). In the compliant waste treatment line, once the ferric waste is removed, the rest of the waste is sent to the compliant waste container (15). Moreover, in the non-compliant waste treatment line, once the ferric waste is removed, the rest of the waste is sent to the non-compliant waste container (12). These elements can be seen both in Figure 1 and in Figure 5.

Moreover, it should be noted that one of the competitive advantages of the present invention is the inclusion of the leachate collectors (2). Preferably, the trays forming the leachate collectors (2) have an extension such that they collect the leachates produced in any element of the system.

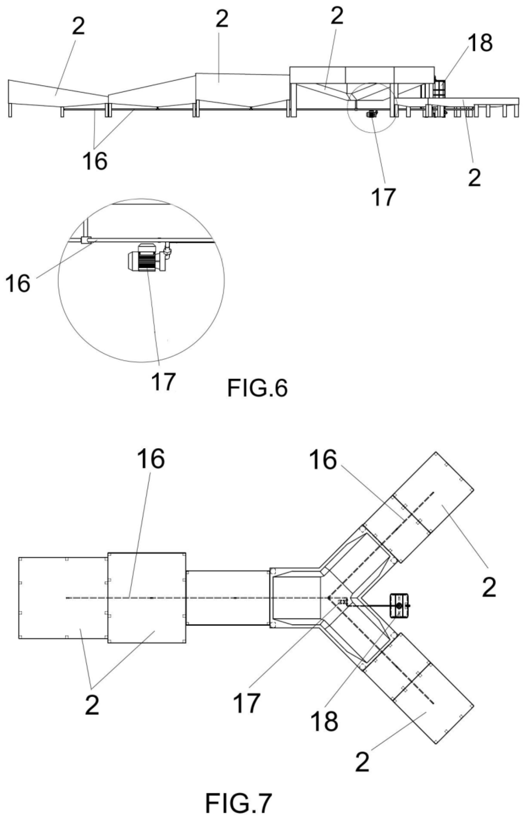

In this sense, as can be seen in Figures 6 and 7, the leachate collectors (2) are arranged under the unloading area (3), the belt with a funnel (4), the first RFID detector (6), the X-ray scanner (7), the second RFID detector (8), and the pivoting paddle (9), with the leachate collectors (2) also being arranged under the compliant and non-compliant waste treatment line.

The leachates fall by gravity from the surface of each of the elements of the system. Said falling by gravity occurs through the slots of the components of the mentioned elements, although preferably, the belt with a funnel (9), the conveyance means (19), and the second conveyance means (20) include perforations to facilitate the discharge of the leachates to the leachate collectors (2).

Therefore, in Figure 6 it can be seen that the leachate collectors (2) are formed by inclined trays leading the leachates to drainage points connected to a leachate conduit (16). Said leachate conduit (16) leads the liquids removed from the upper plane of the system to a leachate storage receptacle (18) by means of the propulsion of a leachate propulsion pump (17).

Finally, it should be noted that the belt with a funnel (4) and the conveyance means (19) are displaced at a speed of between 0.01 m/s and 1.2 m/s, whereas the treatment capacity of the system is between 60 kg/h and 51 t/h.

## Claims

1. A system for the verification and sorting of the contents of bagged waste, **characterized in that** it comprises the following elements:
- an unloading area (3) for unloading the bagged waste,
- a belt with an alignment funnel (4) for aligning the bagged waste,
- a first RFID detector (6) arranged on conveyance means (19) which identifies RFID transmitters associated with the users,
- an X-ray scanner (7) determining the percentage of organic matter and non-organic matter of each bagged waste,
- a pivoting paddle (9) that is motorized and controlled by means of a control unit,
- a compliant waste treatment line formed by at least one bag opener, magnetized means (11), and a ferric waste receptacle (14),
- a non-compliant waste treatment line formed by at least one bag opener, magnetized means (11), and a ferric waste receptacle (14),
- leachate collectors (2) arranged under the aforementioned elements and formed by inclined trays inclined towards drainage points connected to a leachate conduit (16);
wherein the end of the belt with a funnel (4) is arranged above the conveyance means (19) at a height difference of at least 0.1 m to cause the downward displacement of the bagged waste, such that the first RFID detector (6) performs the reading of RFID transmitters in the downward displacement of each bagged waste; and wherein the X-ray scanner (7) determines the percentage of organic matter and non-organic matter of the bagged waste, such that the pivoting paddle (9) is operated by the control unit based on the percentage of organic matter contained in the bagged waste in order to send it selectively to the compliant or non-compliant waste treatment line.

2. The system for the verification and sorting of the contents of bagged waste according to claim 1, **characterized in that** the belt with an alignment funnel (4) for aligning the bagged waste includes a cylinder (5) with bag stop springs.

3. The system for the verification and sorting of the contents of bagged waste according to claim 1, **characterized in that** the belt with an alignment funnel (4) for aligning the bags with waste has an inclination.

4. The system for the verification and sorting of the contents of bagged waste according to claim 1, **characterized in that** the belt with a funnel (4) and the conveyance means (19) are displaced at a speed of between 0.01 m/s and 1.2 m/s, whereas the treatment capacity of the system is between 60 kg/h and 51 t/h.

5. The system for the verification and sorting of the contents of bagged waste according to claim 1, **characterized in that** it has a second RFID detector (8) arranged on second conveyance means (20) and wherein the second conveyance means (20) are arranged below the conveyance means (19) at a height difference of at least 0.1 m for the second RFID detector (8) to confirm the identity of the RFID transmitter determined by the first RFID detector (6).

6. The system for the verification and sorting of the contents of bagged waste according to claim 1, **characterized in that** the bag openers are formed by rotary blades (10).

7. The system for the verification and sorting of the contents of bagged waste according to claim 1, **characterized in that** the magnetized means (11) are formed by magnetized belts or magnetized rollers.

8. The system for the verification and sorting of the contents of bagged waste according to claim 1, **characterized in that** the trays forming the leachate collectors (2) have an extension such that they collect the leachates produced in any element of the system.

9. The system for the verification and sorting of the contents of bagged waste according to claim 1, **characterized in that** it has a leachate propulsion pump (17) connected to the leachate conduit (16) leading the leachates to a leachate storage receptacle (18).

10. The system for the verification and sorting of the contents of bagged waste according to claim 1, **characterized in that** the compliant waste treatment line includes a compliant waste container (15) and the non-compliant waste treatment line includes a non-compliant waste container (12).
